# DEMANDE DE BREVET EUROPEEN

(11) **EP 1 050 613 A1**
(43) Date de publication de la demande: **08.11.2000**
(21) Numéro de dépôt: 99420107.7
(22) Date de dépôt: 03.05.1999
(51) Int. Cl.: D04H 1/60

(54) **Procédé et installation pour la réalisation de feutres à partir de fibres nobles ou recyclées et produits obtenu par la mise en oeuvre d'un tel procédé**

(71) Demandeur: LAROCHE SA, 69470 Cours la Ville (FR)
(72) Inventeur: Laroche, Robert, 69470 Cours la Ville (FR); Morel, André, 69470 Cours la Ville (FR)
(74) Mandataire: Vuillermoz, Bruno

(57) **Abrégé**

- Entre la sortie d'une ligne de mélange de fibres (1) et l'entrée d'une ligne de nappage proprement dite, on réalise le dépôt de liants en poudre directement sur la nappe fibreuse supportée par un tapis peseur (2) au moyen d'un distributeur (3). Après distribution du liant, on réalise un mélange mécanique (4) dans une enceinte étanche à la sortie duquel on forme une nappe grossière sur un convoyeur, nappe qui est soumise à un traitement thermique dans une ambiance chaude et humide (6), suivie d'un séchage avant d'être transférée à un ensemble de défibrage (8) pour être amenée à une ligne de nappage proprement dite.

## Description

### Domaine Technique

La présente invention concerne la réalisation de feutres d'isolation thermiques et/ou phoniques, matériaux de rembourrage obtenus à partir de fibres nobles ou recyclées qui sont utilisées notamment dans le secteur de l'automobile, du bâtiment, de l'ameublement,.....

Elle a trait plus particulièrement à un procédé perfectionné permettant de réaliser des feutres à partir de fibres nobles ou recyclées, la liaison des fibres entre elles étant obtenue par adjonction d'un liant synthétique.

### Techniques antérieures

La technique la plus couramment utilisée pour réaliser des feutres à partir de fibres nobles ou recyclées avec adjonction de liants consiste, après avoir réalisé le défibrage et le mélange de fibres, à réceptionner lesdites fibres sous la forme d'une nappe aérée, de poids déterminé, n'ayant pratiquement aucune cohésion, les fibres élémentaires n'étant pas liées entre elles.

On dépose ensuite sur la nappe ainsi formée une quantité prédéterminée d'une matière liante en poudre résine phénolique ou autre, puis on réalise le nappage proprement dit au moyen d'une nappeuse pneumatique conventionnelle, se présentant sous la forme d'un ou deux tambours perforés rotatifs travaillant en dépression pour assurer la formation de la nappe.

La nappe ainsi formée peut alors être transféré dans un four pour révéler les propriétés liantes de la poudre et assurer la thermofixation du mélange fibres/liant.

Le feutre ainsi obtenu peut être utilisé tel quel, densifié par calandrage si nécessaire ou pour la réalisation d'articles moulés.

Cette manière de procéder pose cependant de nombreux problèmes compte tenu du fait que pour réaliser le nappage, on met en oeuvre d'importants volumes d'air qui circulent à des vitesses très élevées.

En effet, les densités apparentes des composants en fibres et poudres sont totalement opposées et il est donc évident que les micro-grains de poudre sont propulsés plus rapidement sous l'action de l'air que les fibres.

Par suite, le mélange des composants - fibres/poudre liante - se fait uniquement par aspiration sur le ou les tambours perforés de sortie des machines.

Par ailleurs, en fonction de la vitesse de l'air et/ou de l'orientation des flux, il peut y avoir une concentration plus importante de liants, soit sur la face inférieure soit sur la face supérieure du feutre formé, et il n'y a pas véritablement un mélange intime homogène et constant.

Enfin, une telle manière d'incorporer le liant à l'intérieur du feutre, provoque :
- des rejets importants de poudre liante à l'extérieur des installations d'où pollution de l'environnement des machines ;
- des encrassements anormaux à l'intérieur desdites machines ;
- des irrégularités flagrantes dans la qualité des produits ;
- des pertes importantes de liant qui impliquent une réintroduction complexe et délicate à réaliser en tête de l'installation de traitement et ;
- des temps de nettoyage excessifs du matériel et des locaux de production.

Pour résoudre ces problèmes, il a été proposé, ainsi que cela ressort notamment du FR-A-2 468 676, de remplacer le dépôt de liant en poudre par la pulvérisation en surface de la nappe d'un liant sous forme liquide.

Une telle manière de procéder ne permet pas cependant de réaliser une imprégnation à coeur, mais simplement un collage en surface.

Par ailleurs, une telle solution présente également comme inconvénients :
- un encrassement rapide des installations avec risques de collage sur les convoyeurs ;
- un transfert délicat de la nappe vers le four.

### Exposé de l'Invention

L'invention vise à réaliser un feutre à partir de fibres nobles ou de récupération, dans lequel la liaison entre les fibres est obtenue au moyen de liant sous forme de poudre.

Elle concerne plus particulièrement un procédé qui permet de résoudre l'ensemble des problèmes que pose la solution antérieure qui consiste à réaliser le dépôt de poudre à l'entrée de la ligne de nappage proprement dite, ce procédé éliminant pratiquement toute pollution des machines et de l'environnement ainsi que la perte de liants.

L'invention concerne également une installation perfectionnée permettant la mise en oeuvre d'un tel procédé.

D'une manière générale, le procédé conforme à l'invention consiste :
- à réaliser une nappe grossière à partir de fibres nobles ou recyclées déjà dosées et mélangées par une ligne de préparation traditionnelle ;
- à contrôler le poids de ladite nappe grâce à un tapis peseur ou tout autre système de pesage ;
- à distribuer sur cette nappe un pourcentage prédéterminé de liant en poudre ;
- à réaliser le nappage final dudit mélange fibres/liant au moyen d'une nappeuse pneumatique conventionnelle.

Il se caractérise en ce que :
- le mélange fibres/liant est réalisé directement à la sortie de la ligne de mélange, et avant introduction dans la ligne de nappage classique ;
- après distribution du liant sur les fibres, on réalise un mélange mécanique intime des fibres avec le liant à l'intérieur d'une enceinte étanche ;
- en sortie du mélangeur mécanique, une nappe d'épaisseur réglable est formée en continu et soumise à un traitement thermique dans une ambiance chaude et humide suivie d'un séchage laissant de préférence subsister un taux d'humidité à la nappe formée ;
- avant transfert vers la ligne de nappage conventionnel, on procède à un défibrage partiel de la nappe préalablement liée permettant d'obtenir des flocons de fibres liées entre elles.

En procédant d'une telle manière, on introduit donc à l'intérieur de la nappeuse pneumatique non pas un mélange de fibres individualisées et de poudre liante, mais des fibres sur lesquelles la matière liante adhère déjà.

En sortie de la ligne de nappage, le feutre obtenu est réalisé de manière conventionnelle pour être traité thermiquement afin de révéler de manière définitive les propriétés liantes des poudres.

En fonction de la quantité de poudres liantes incorporées aux fibres, il est possible d'obtenir des feutres dont le poids au mètre carré peut varier de 400 g à 2000 g, lesdits feutres pouvant être soit utilisés tels que, soit, si la quantité de poudres liantes est plus importante, être éventuellement thermoformés.

### Manière de réaliser l'Invention

L'invention sera cependant mieux comprise grâce à l'exemple concret de réalisation donné ci-après à titre indicatif et qui est illustré par le schéma annexé qui illustre une forme de réalisation d'une installation permettant la mise en oeuvre d'un tel procédé.

En se reportant au schéma annexé, pour la réalisation d'un feutre réalisé conformément au procédé selon l'invention, on utilise une ligne de production qui comporte un matériel de mélange de fibres nobles ou de récupération, dont seule la sortie, référencée (1) est représentée sur le schéma annexé.

Les fibres mélangées sont déposées sur un tapis peseur ou tout autre système de pesage (2) de manière à former une nappe grossière et aérée, de poids déterminé, lesdites fibres n'ayant pratiquement aucune cohésion entre elles.

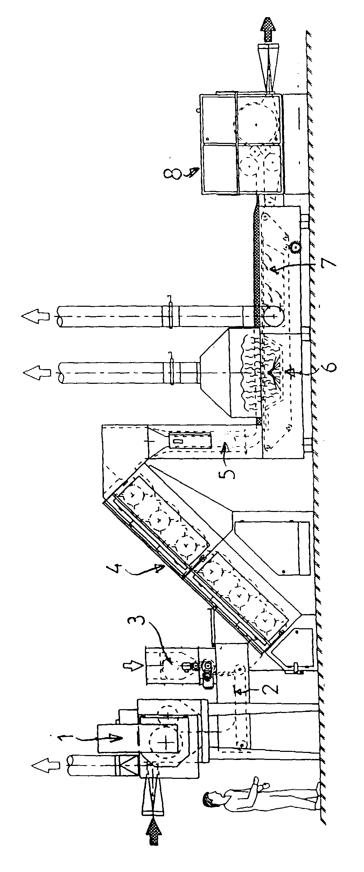

Conformément à l'invention, à la sortie de cette ligne de mélange, et avant transfert à la ligne de nappage proprement dite, ligne non représentée à la figure annexée, on réalise l'incorporation de matières liantes sous forme de poudre.

Pour ce faire, on procède tout d'abord au dépôt de la matière liante au moyen d'un distributeur (3), ce dépôt étant réalisé directement sur la nappe fibreuse supportée et transportée par le tapis peseur (2).

La nappe et la poudre liante sont alors transférées à un mélangeur (4) qui assure un brassage mécanique et intime des fibres et de la poudre, au moyen d'éléments actifs, constitués par exemple par des tambours rotatifs, disposés à l'intérieur d'une enceinte étanche.

Les fibres et la poudre intimement mélangées sont ensuite transférées dans une cheminée (5) de régulation qui les distribue sous forme de nappe grossière sur un convoyeur perforé qui, en continu, transfère la nappe à une zone (6) où elle subit un traitement thermique dans une ambiance chaude et humide.

Ce traitement thermique est de préférence réalisé sous la forme de vaporisage.

Après traitement thermique, la nappe est alors séchée succinctement en (7) sous l'action d'un courant d'air chaud, le séchage étant cependant réalisé afin qu'un taux d'humidité résiduel subsiste.

Avant transfert à la ligne de nappage traditionnelle, la nappe ainsi séchée est alors défibrée grâce à un ensemble (8) d'ouvraison conventionnel.

Les fibres qui sont introduites dans la ligne de nappage se présentent sous la forme de «flocons », la matière liante en poudre adhérant à la surface desdites fibres.

Il a été constaté, qu'en procédant d'une telle manière, lors de la réalisation proprement dite du feutre sur la ligne de nappage pneumatique, qu'il n'y avait pratiquement aucune perte de matière liante et que l'on éliminait tous les problèmes de pollution, récupération de poudre, qui se posaient avec les procédés antérieurs où la poudre était distribuée directement à l'entrée de ladite ligne de nappage.

Les feutres obtenus selon le procédé conforme à l'invention, sont beaucoup plus homogènes et réguliers que les feutres antérieurs, et peuvent être alors traités dans un four traditionnel.

Enfin, en fonction de la poudre liante incorporée au feutre, il peut être envisagé de réaliser des articles thermoformés.

## Revendications

1. Procédé de réalisation de feutres d'isolation thermiques et/ou phoniques, matériaux de rembourrage obtenus à partir de fibres nobles ou recyclées qui sont utilisées notamment dans le secteur de l'automobile, du bâtiment, de l'ameublement.... , qui consiste :
- à réaliser une nappe grossière à partir de fibres nobles ou recyclées déjà dosées et mélangées par une ligne de préparation traditionnelle ;
- à contrôler le poids de ladite nappe grâce à un tapis peseur ou tout autre système de pesage ;
- à distribuer sur cette nappe un pourcentage prédéterminé de liant en poudre ;
- à réaliser le nappage final dudit mélange fibres/liant au moyen d'une nappeuse pneumatique conventionnelle.
caractérisé en ce que :
- le mélange fibres/liant est réalisé directement à la sortie de la ligne de mélange, et avant introduction dans la ligne de nappage classique ;
- après distribution du liant sur les fibres, on réalise un mélange mécanique intime des fibres avec le liant à l'intérieur d'une enceinte étanche ;
- en sortie du mélangeur mécanique, une nappe d'épaisseur réglable est formée en continu et soumise à un traitement thermique dans une ambiance chaude et humide suivie d'un séchage laissant de préférence subsister un taux d'humidité à la nappe formée ;
- avant transfert vers la ligne de nappage conventionnel, on procède à un défibrage partiel de la nappe préalablement liée permettant d'obtenir des flocons de fibres liées entre elles.

2. Installation pour la mise en oeuvre du procédé selon la revendication 1, qui comporte une ligne de défibrage et mélange de fibres à la sortie de laquelle les fibres sont distribuées sur un tapis peseur ou autre système de pesage (2) suivie d'une ligne de nappage au moyen d'une nappeuse pneumatique conventionnelle, ainsi que des moyens permettant d'incorporer un pourcentage prédéterminé de liants en poudre à l'intérieur du mélange fibreux, caractérisée en ce que le dépôt des liants en poudre est réalisé par l'intermédiaire d'un ensemble de traitement intercalé entre la sortie de la ligne de mélange (1) et l'entrée de la ligne de nappage, ledit ensemble comprenant :
- un distributeur (3) de poudre liante directement sur la nappe fibreuse supportée sur le tapis peseur (2) disposée en sortie de la ligne de mélange ;
- un mélangeur mécanique (4) entouré par une enceinte étanche à la sortie duquel les fibres et poudres mélangées sont distribuées sous forme d'une nappe grossière sur un convoyeur perforé ;
- un ensemble de traitement thermique (6) suivi d'un séchage au moyen d'un courant d'air chaud et ;
- un ensemble de défibrage (8) suivi de moyens de transfert à une ligne de nappage proprement dit

3. Produits obtenus par la mise en oeuvre du procédé selon la revendication
